# EUROPEAN PATENT SPECIFICATION

(11) **EP 2 093 936 B1**
(45) Date of publication and mention of the grant of the patent: **12.12.2012**
(21) Application number: 08856047.9
(22) Date of filing: 28.10.2008
(51) Int. Cl.: H04L 29/08, H04L 29/12, H04L 29/14

(54) **METHOD AND NETWORK DEVICE FOR SOLVING ADDRESS CONFLICT**
VERFAHREN UND NETZEINRICHTUNG ZUR AUFLÖSUNG VON ADRESSKONFLIKTEN
PROCÉDÉ ET DISPOSITIF RÉSEAU UTILES POUR RÉSOUDRE UN CONFLIT D'ADRESSES

(30) Priority: 09.11.2007 CN 200710169583
(43) Date of publication of application: 26.08.2009
(73) Proprietor: Huawei Technologies Co., Ltd., Longgang District, Shenzhen Guangdong 518129 (CN)
(72) Inventor: WANG, Deyi, Guangdong 518129 (CN); CHENG, Lin, Guangdong 518129 (CN); RONG, Gengzhi, Guangdong 518129 (CN); WANG, Daoming, Guangdong 518129 (CN); LI, Zhiqiang, Guangdong 518129 (CN)
(74) Representative: Epping - Hermann - Fischer
(86) International application number: PCT/CN2008/072854
(87) International publication number: WO 2009/071010

(56) References cited:
- EP-A1- 1 986 337
- CN-A- 1 783 803
- CN-A- 101 159 606
- CN-C- 1 317 831
- CN-C- 100 341 257
- US-A- 5 774 640
- US-A1- 2005 243 842

## Description

### Field of the Invention

The present invention relates to network communications, and in particular, to a method and network device for solving address conflicts.

### Background of the Invention

A media access control (MAC) address, which is generally 48 bits long, is an address allocated to a network device before factory delivery. Each manufacturer must apply for a group of MAC addresses from the Institute of Electrical and Electronics Engineers (IEEE), but they may apply for different MAC address groups. During the production of the network device, the manufacturer fixes the MAC address in a read-only memory (ROM) of the network device. The ROM is produced or customized by the manufacturer. The MAC address may vary with the network device.

The MAC address is an important ID for communications between the network device and other devices. Taking a broadband access device-digital subscriber line access multiplexer (DSLAM) as an example, the MAC address is an important ID for the communications between the DSLAM and external management interfaces. A lot of management interfaces and layer 3 interfaces of the DSLAM depend on the MAC address of the DSLAM. In addition, some management interfaces require that the MAC address of the DSLAM should not be changed. The DSLAM needs to be restarted to refresh related data if the MAC address is changed. It is apparent that the MAC address of the DSLAM is very important. Furthermore, a DSLAM should have a unique MAC address. Specifically, the MAC address of the DSLAM is stored in main control boards, each of which has a unique MAC address.

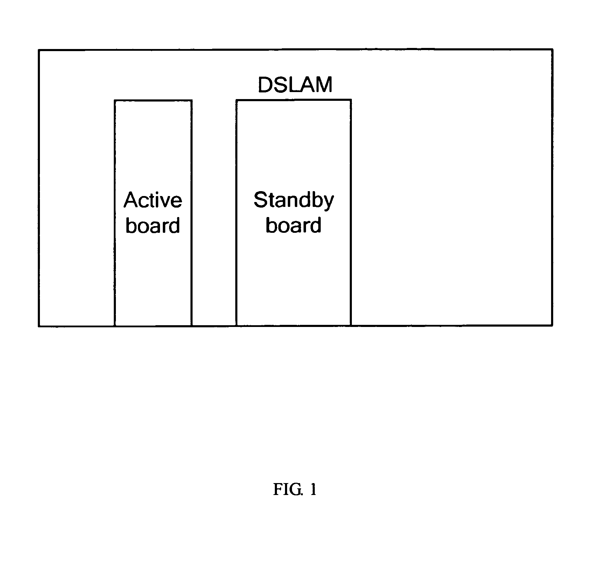

In the related art, the DSLAM improves its reliability by using two main control boards. In the two main control boards, one is the active board and the other is the standby board, and the active and standby boards are in position at the same time. The service configuration data and hardware configuration of the standby board are the same as those of the active board. FIG. 1 is a block diagram of the DSLAM configured with two main control boards in the related art. The MAC address of a DSLAM configured with two main control boards is the MAC address of the active board. Because each DSLAM has only one MAC address, the active board should synchronize its own MAC address with the standby board to ensure that the MAC address of the DSLAM is unique. In this case, the impact on communication services is minimized during the switchover between the active board and the standby board.
Document D1 (US 5 774 640 A) describes a method and apparatus for providing a fault tolerant network interface controller. A fault tolerant network interface is achieved by providing primary and alternate network controllers, dual transceivers, dual cables and dual connectors. This fault tolerant interface is driven by a logical device driver which controls the physical device driver for the primary and alternate network controllers. The logical device driver causes polling messages to be sent between the primary and alternate network controllers to determine if a fault has occurred in either of these network controllers. Faults detected are logged and error recovery actions are provided according to the nature of the faults detected. If the primary network controller is found to be faulty, the secondary network controller will assume the physical address of the primary network controller and provides the services of the primary network controller while the primary network controller is effectively removed from the network. (See abstract of the document D1).

Document D2 (US 2005/243842A1) describes a method of providing a reconfiguration of a packet switching fabric plane and/or a source board of a media gateway, as well as a media gateway for executing this method. The media gateway comprises a set of packet switching fabric planes, a set of source boards and a set of destination boards. The set of source boards and the set of destination boards are connected via Ethernet trunks through a set of packet switching fabric planes. The media gateway detects failures of a packet switching fabric plane and/or a destination board. If it detects such failure, it determines the Ethernet media access control address of the concerned destination board. (See abstract of the document D2).

Document D3 (EP 1 986 337 A1) describes a method for synchronizing connection state in data communication. In the computer program, the communication node concerned includes an active communication unit and a standby communication unit. The second communication unit takes over the first communication unit for TCP connection by the same connection parameter. It means that the second communication unit must use the IP address of the first communication unit. (See the column 5, paragraph [0053] and the column 9, paragraph [0092] of the document D3).

During the research and practice of the related art, the inventor discovers the following problems:

According to the related art, the MAC address of the DSLAM is the MAC address of the active board, and the MAC address of the standby board is synchronized with the MAC address of the active board. Thus, when the active board and the standby board are switched over, (that is, the standby board works as the active board and the active board works as the standby board), the MAC addresses of two DSLAMs may conflict if the standby board is installed in a new DSLAM upon switchover, which may cause the failure of communications between the two DSLAMs and interruption of related communication services.

### Summary of the Invention

Various embodiments of the present invention are directed to providing a method and network device for solving address conflicts to overcome communication failures due to address conflicts of the network device in the related art.

To achieve the objective, an embodiment of the present invention provides a network device for solving address conflicts. The network device comprises a removable component, wherein the removable component is adapted to act as an active board or as a standby board, wherein the network device further comprises: a storing module, independent of a removable component and configured to store a fixed ID information bound to the network device; and a synchronizing module, configured to synchronize an ID information of the removable component acting as the active board upon switchover with the fixed ID information stored in the storing module when the switchover of the removable component in the network device occurs.

Another embodiment of the present invention provides a method for solving address conflicts. The method includes: storing a fixed ID information bound to the network device, wherein the fixed ID information is stored in a storing module, wherein the storing module is independent of a removable component that acts as an active board or a standby board; and synchronizing an ID information of the removable component acting as the active board upon switchover with the fixed ID information bound to the network device when the switchover of the removable component in the network device occurs.

According to the technical solution provided in embodiments of the present invention, in the network device for solving address conflicts, the storing module stores the fixed ID information bound to the network device, and the synchronizing module synchronizes the ID information bound to the removable component of the network device with the ID information in the storing module. In this case, when the switchover of the removable component occurs or a new removable component is inserted in the network device, the ID information of the network device is still the fixed ID information in the storing module. Thus, the ID information of the network device does not conflict with the ID information of other network devices, where the ID information includes the addresses of the network devices, so that the address conflicts of the network devices are avoided.

### Brief Description of the Drawings

FIG. 1 is a block diagram of a digital subscriber line access multiplexer (DSLAM) in the related art;

FIG. 2-1 shows the address of a network device X and addresses of an active board and a standby board before the switchover between the active board and standby board;

FIG. 2-2 shows the address of a network device X and addresses of an active board and a standby board after the switchover between the active board and standby board;

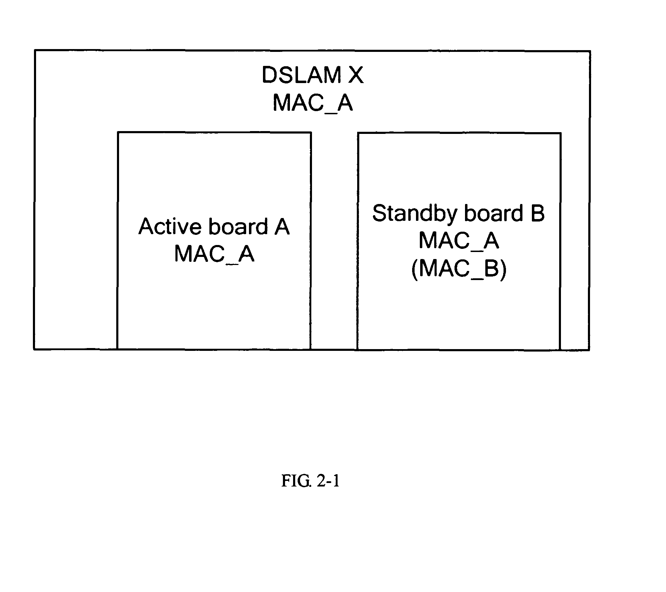

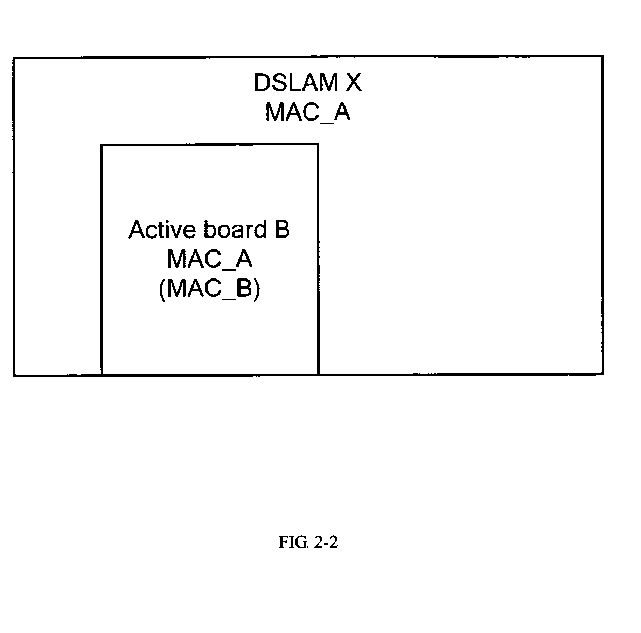

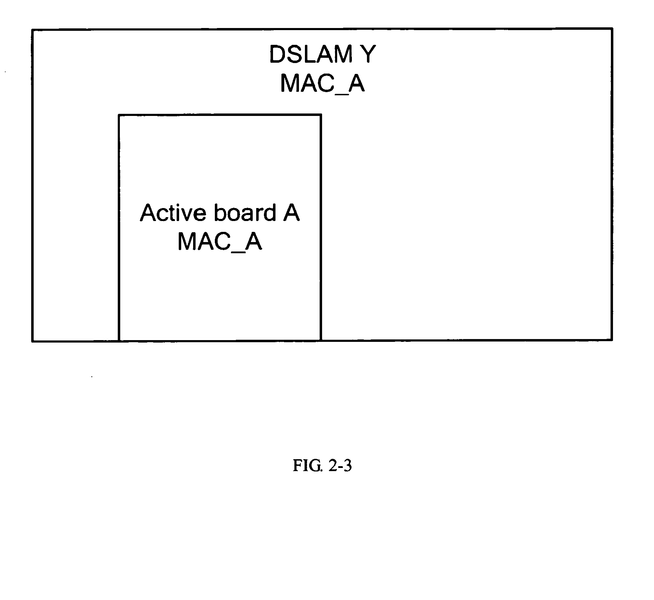

FIG. 2-3 shows the address of a network device Y when a standby board is inserted in the network device Y after a network device X performs active/standby switchover;

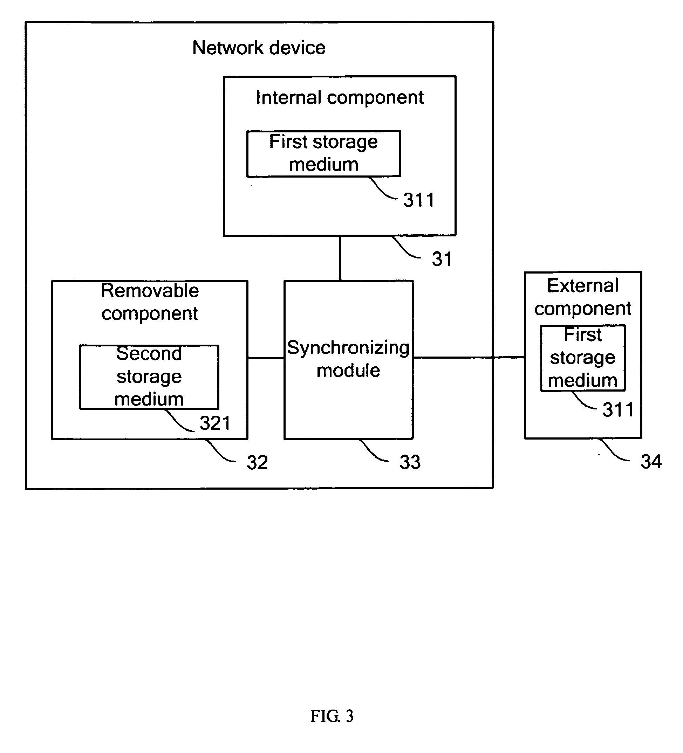

FIG. 3 is a block diagram of a network device provided in an embodiment of the present invention; and

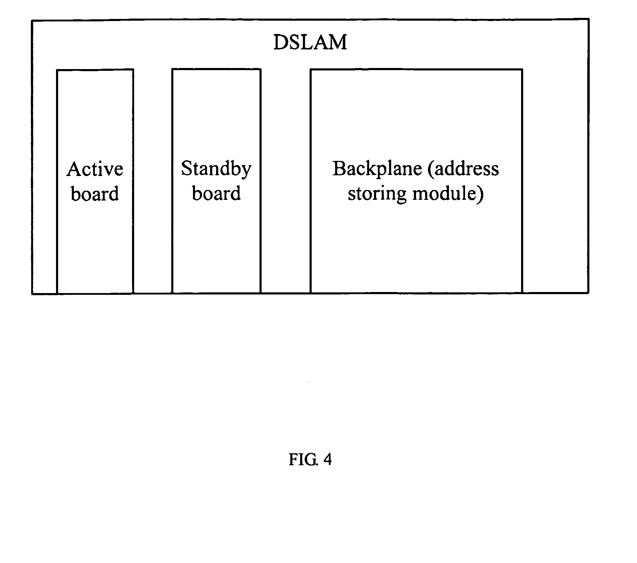

FIG. 4 shows a structure of a DSLAM provided in an embodiment of the present invention.

### Detailed Description of the Invention

A lot of potential troubles may also occur if the problem of MAC address conflicts in the related art is solved by modifying the MAC address of the main control board A. Each manufacturer applies for a group of MAC addresses to uniquely identify produced devices according to international standards, but operators plan the Internet Protocol (IP) addresses rather than the MAC addresses of devices during the network planning. When there are many network devices, the main control board A may have the same MAC address as other devices, thus causing MAC address conflicts.

If a floating MAC address mechanism is used (that is, the MAC address of the DSLAM configured with two main control boards does not use the MAC address of the main control board but a MAC address generated after the MAC addresses of the active and standby boards are converted according an algorithm), the MAC address conflicts cannot be solved fundamentally because the MAC address is a fixed address that each manufacturer applies for according to international standards.

If the MAC address of the active board A is not synchronized with the standby board B in the DSLAM configured with two main control boards, that is, the MAC address of the DLSAM is still the address "MAC_A" of the active board A, the address "MAC_B" of the standby board B is the MAC address of the DSLAM after the active board and the standby board are switched over. When the active board and the standby board are switched over, the change of the MAC address may require a lot of communication forwarding entries to be re-learned because the layer 3 service communication on the DSLAM depends on the MAC address of the DSLAM, which may cause route flapping and affect the communication quality severely.

For better understanding of the technical solution of the present invention, the present invention is hereinafter described in detail with reference to the accompanying drawings and exemplary embodiments.

FIG. 3 is a block diagram of a network device provided in an embodiment of the present invention.

As shown in FIG. 3, the network device includes an internal component 31 or an external component 34 connected to the network device, where the internal component 31 or the external component 34 includes a first storage medium 311, configured to store the ID information bound to the network device. That is, the internal component 31 or external component 34 is a storing module, and the first storage medium 311 in the internal component 31 or external component 34 provides a storage medium for the storing module.

The network device further includes:
a removable component 32, independent of the internal component or the external component and including a second storage medium 321, configured to store the ID information of the removable component; and
a synchronizing module 33, configured to synchronize the ID information stored in the second storage medium 321 with the ID information stored in the first storage medium 311.

Because the unique ID of each network device remains unchanged, address conflicts can be effectively solved when the internal component that has the ID information of the network device is switched to other network devices or multiple components are switched over after the network device is used in the communication system.

The ID information bound to the network device is the ID information written to the first storage medium during the production of the network device. The ID information bound to the removable component is the ID information written to the second storage medium during the production of the removable component.

The first storage medium or the second storage medium may be a read-only storage medium or an erasable storage medium. For example, the erasable storage medium may be a FLASH memory or an electrically erasable programmable read-only memory (E²PROM). New ID information may be written to the erasable storage medium in specific mode.

The ID information includes a unique address that identifies the device. The unique address may be a MAC address or an IP address and other data that identifies the unique address of the device. Taking the IPv6 address as an example, each network device may be allocated a fixed IPv6 address because a lot of IPv6 addresses are available in the future applications. In this embodiment, the unique address is a MAC address and the network device is a DSLAM. When the DSLAM is started, the synchronizing module synchronizes the MAC address stored in the first storage medium of the DSLAM with the second storage medium of the removable component which works as the main control board. Different from the related art, the MAC address of the DSLAM is the MAC address in the first storage medium instead of that in the second storage medium of the removable component that works as the main control board. In the network device configured with two main control boards, the standby board synchronizes the MAC address in the synchronization phase of the DSLAM. That is, it synchronizes its own MAC address with the MAC address of the DSLAM.

The ID information bound to the network device is the ID information written to the first storage medium during the production of the network device.

In particular, when the active board and the standby board of the network device are switched over, the ID information of the current network device is still the ID information bound to the network device in the first storage medium, for example, the MAC address bound to the network device. When a new removable component is inserted as a main control board in the network device, the synchronizing module synchronizes the ID information stored in the first storage medium of the network device with the second storage medium of the removable component that works as the main control board. That is, the address of the current network device is still the ID information bound to the network device in the first storage medium, for example, the MAC address bound to the network device.

The internal component or external component of the network device does not depend on the removable component of the network device. When the components are replaced or the active board and standby board are switched over in the network device, the current network device still uses the ID information bound to the network device in the first storage medium as its ID information to avoid conflicts due to the change of the ID information. If the ID information is an address, route flapping caused by the address change may be avoided.

The internal component may include the standby board of the network device, for example, the backplane of the DSLAM. FIG. 4 shows a structure of the DSLAM. Taking the MAC address as an example, the backplane is preferred for storing the MAC address in the storage device from the perspective of stability and reliability in combination with the deployment capability of the storage device. The first storage medium storing the MAC address is deployed in the backplane, to which a unique MAC address is written by the manufacturer during the production. After the DSLAM is started, it reads the MAC address from the first storage medium of the backplane. Even if the two main control boards are switched over or other removable components are inserted in the network device, the MAC address of the DSLAM remains unchanged because the backplane still works as the storage device storing the MAC address. In addition, to ensure that the main control board works normally, the MAC address bound to the removable component in the second storage medium of the removable component needs to be synchronized with the MAC address bound to the network device in the first storage medium.

If the MAC address is wrong or missing due to damage of the address storage medium in the backplane, the address storage medium needs to be re-obtained from the manufacturer. Because a new MAC address is written to the address storage medium by the manufacturer, the new MAC address may not cause conflicts.

The storage medium in the backplane may be replaced with a pluggable storage card, for example, the external component 34 shown in FIG. 3. The external component 34 may be connected to the backplane through a pluggable interface (or jack).

The position of the first storage medium is not limited in this embodiment. The first storage medium may be deployed in the backplane of the DSLAM or in a subrack of the DSLAM so long as the features of stability and reliability are fulfilled. For example, a storage card is deployed in the rack where the subrack is located or in the backplane of the DSLAM. When the first storage medium is not located in the network device, it may be connected to the network device through an interface. For example, the storage card is inserted in the network device or inserted through a USB interface. Certainly, the storage card may be inserted in the backplane of the network device.

The network device is not limited to the DSLAM device. Any device configured with two active/standby boards with a MAC address may be used, for example, a local area network switch (LanSwitch) in a metropolitan area network (MAN) and a router in the backbone network.

The first storage medium 311 may be a non-volatile memory, for example, FLASH, SDRAM, EPROM, and E²PROM, or dual in-line package (DIP) switch. It stores addresses in hardware mode.

The following describes a method provided in an embodiment of the present invention.

When a removable component runs in a network device, the network device communicates by using the ID information stored in the removable component.

The network device synchronizes the ID information bound to the network device with the removable component.

When the removable component runs in the network device, the process of synchronizing the ID information bound to the removable component with the ID information bound to the network device includes: when the switchover of the removable component in the network device occurs, synchronizing the ID information bound to the network device with the removable component that acts as the active board upon switchover; or when a new removable component is inserted as a main control board in the network device, synchronizing the ID information bound to the network device with the new removable component that acts as the main control board.

The ID information may be unique data that identifies the device, for example, a MAC address, an IP address or other data that identifies the unique address of the device.

The ID information bound to the network device is stored in the internal component or external component that is independent of the removable component rather than in the removable component of the network device. Supposing the ID information is an address, when the removable component is replaced in the current network device or the removable component that acts as the active/standby board is switched over (for example, the active board or standby board of the current network device is installed in other network devices), the network device still uses the address in the address storage medium to avoid address conflicts due to the address change, and avoid route flapping due to the address change. The first storage medium may be deployed in the backplane of the DSLAM. Certainly, the position of the first storage medium is not limited to the backplane or subrack of the DSLAM so long as the features of stability and reliability are fulfilled. For example, the first storage medium may be deployed in the rack where the subrack is located or in the standby board.

The network device is not limited to the DSLAM device. Any device configured with two active/standby boards with a MAC address may be used, for example, a LanSwitch in the MAN and a router in the backbone network.

The address storage medium may be a non-volatile memory, for example, SDRAM, EPROM, E²PROM, and FLASH, or DIP switch.

Although the invention has been described through some exemplary embodiments, those skilled in the art can make various modifications and variations to the invention without departing from the scope of the invention. The invention is intended to cover these modifications and variations provided that they fall in the scope of protection defined by the following claims or their equivalents.

## Claims

1. A network device, **characterized by** comprising a removable component (32), wherein the removable component is adapted to act as an active board or as a standby board,
wherein the network device further comprises:
a storing module (311), independent of the removable component and configured to store a fixed ID information bound to the network device; and
a synchronizing module (33), configured to synchronize an ID information of the removable component acting as the active board upon switchover with the fixed ID information stored in the storing module when the switchover of the removable component in the network device occurs.

2. The network device of claim 1, **characterized by** further comprising: a changing module, configured to change the fixed ID information bound to the network device which is stored in the storing module.

3. The network device of claim 1, **characterized in that** the storing module comprises:
internal components of the network device.

4. The network device of claim 1, **characterized in that** the storing module comprises:
external components connected to the network device.

5. The network device of claim 3 or 4, **characterized in that** the internal components of the network device comprise: a backplane, a side panel or a subrack.

6. The network device of claim 3 or 4, **characterized in that** the external components of the network device comprise: a pluggable storage card deployed in the backplane, side panel or subrack of the network device.

7. The network device of claim 1, **characterized in that** the storage medium of the storing module comprises: read-only storage medium, erasable storage medium or dual in-line package, DIP, switch.

8. The network device of any one of claims 1 to 6, **characterized in that** the network device comprises: a digital subscriber line access multiplexer, DSLAM, a local area network switch, LanSwitch, in a metropolitan area network, MAN, and a router in a backbone network.

9. A method for solving address conflicts, **characterized by** comprising:
storing a fixed ID information bound to a network device, wherein the fixed ID information is stored in a storing module (311), wherein the storing module is independent of a removable component (32) that acts as an active board or a standby board; and
synchronizing an ID information of the removable component acting as the active board upon switchover with the fixed ID information bound to the network device when the switchover of the removable component in the network device occurs.

10. The method of claim 9, **characterized in that** the fixed ID information bound to the network device is a unique address that identifies the network device.

11. The method of claim 9, **characterized in that** the unique address comprises: a media access control, MAC, address or an Internet Protocol, IP, address.

## Patentansprüche

1. Netzwerkeinrichtung, **dadurch gekennzeichnet, dass** sie eine auswechselbare Komponente (32) umfasst,
wobei die auswechselbare Komponente dafür ausgelegt ist, als eine aktive Platine oder als eine Standby-Platine zu wirken,
wobei die Netzwerkeinrichtung ferner Folgendes umfasst:
ein Speichermodul (311), das von der auswechselbaren Komponente unabhängig und
dafür ausgelegt ist, eine mit der Netzwerkeinrichtung gebundene feste ID-Information zu speichern; und
ein Synchronisierungsmodul (33), das dafür ausgelegt ist, eine ID-Information der als die aktive Platine wirkenden auswechselbaren Komponente beim Überwechseln mit der in dem Speichermodul gespeicherten festen ID-Information zu synchronisieren,
wenn der Überwechsel der auswechselbaren Komponente in der Netzwerkeinrichtung stattfindet.

2. Netzwerkeinrichtung nach Anspruch 1, **dadurch gekennzeichnet, dass** sie ferner Folgendes umfasst: ein Änderungsmodul, das dafür ausgelegt ist, die mit der Netzwerkeinrichtung gebundene feste ID-Information, die in dem Speichermodul gespeichert ist, zu ändern.

3. Netzwerkeinrichtung nach Anspruch 1, **dadurch gekennzeichnet, dass** das Speichermodul Folgendes umfasst: interne Komponenten der Netzwerkeinrichtung.

4. Netzwerkeinrichtung nach Anspruch 1, **dadurch gekennzeichnet, dass** das Speichermodul Folgendes umfasst: mit der Netzwerkeinrichtung verbundene externe Komponenten.

5. Netzwerkeinrichtung nach Anspruch 3 oder 4, **dadurch gekennzeichnet, dass** die internen Komponenten der Netzwerkeinrichtung Folgendes umfassen: eine Rückwandplatine, ein Seitenpaneel oder einen Baugruppenträger.

6. Netzwerkeinrichtung nach Anspruch 3 oder 4, **dadurch gekennzeichnet, dass** die externen Komponenten der Netzwerkeinrichtung Folgendes umfassen: eine steckbare Speicherkarte, die in der Rückwandplatine, dem Seitenpaneel oder Baugruppenträger der Netzwerkeinrichtung eingesetzt ist.

7. Netzwerkeinrichtung nach Anspruch 1, **dadurch gekennzeichnet, dass** das Speichermedium des Speichermoduls Folgendes umfasst: Nurlese-Speichermedium, löschbares Speichermedium oder einen Dual-in-Line-Package- bzw. DIP-Schalter.

8. Netzwerkeinrichtung nach einem der Ansprüche 1 bis 6, **dadurch gekennzeichnet, dass** die Netzwerkeinrichtung Folgendes umfasst: einen Digital Subscriber Line Access Multiplexer, DSLAM, einen lokalen Netzwerk-Switch bzw. LanSwitch in einem städtischen Netzwerk, MAN, und einen Router in einem Backbone-Netzwerk.

9. Verfahren zum Auflösen von Adressenkonflikten, **dadurch gekennzeichnet, dass** es Folgendes umfasst:
Speichern einer mit einer Netzwerkeinrichtung gebundenen festen ID-Information,
wobei die feste ID-Information in einem Speichermodul (311) gespeichert wird,
wobei das Speichermodul von einer auswechselbaren Komponente (32), die als eine aktive Platine oder eine Standby-Platine wirkt, unabhängig ist; und
Synchronisieren einer ID-Information der als die aktive Platine wirkenden auswechselbaren Komponente beim Überwechseln mit der mit der Netzwerkeinrichtung gebundenen festen ID-Information, wenn der Überwechsel der auswechselbaren Komponente in der Netzwerkeinrichtung stattfindet.

10. Verfahren nach Anspruch 9, **dadurch gekennzeichnet, dass** die mit der Netzwerkeinrichtung gebundene feste ID-Information eine einzigartige Adresse ist, die die Netzwerkeinrichtung identifiziert.

11. Verfahren nach Anspruch 9, **dadurch gekennzeichnet, dass** die einzigartige Adresse Folgendes umfasst: eine Media Access Control- bzw. MAC-Adresse oder eine Internet-Protokoll- bzw. IP-Adresse.

## Revendications

1. Dispositif de réseau, **caractérisé en ce qu'**il comprend un composant amovible (32), dans lequel le composant amovible est adapté pour servir de carte active ou de carte de secours,
dans lequel le dispositif de réseau comprend en outre :
un module de mémorisation (311) indépendant du composant amovible et configuré pour mémoriser une information d'ID fixe associée au dispositif de réseau ; et
un module de synchronisation (33) configuré pour synchroniser une information d'ID du composant amovible servant de carte active lors d'un transfert avec l'information d'ID fixe mémorisée dans le module de mémorisation quand le transfert du composant amovible dans le dispositif de réseau se produit.

2. Dispositif de réseau selon la revendication 1, **caractérisé en ce qu'**il comprend en outre : un module de changement, configuré pour changer l'information d'ID fixe associée au dispositif de réseau qui est mémorisée dans le module de mémorisation.

3. Dispositif de réseau selon la revendication 1, **caractérisé en ce que** le module de mémorisation comprend des composants internes du dispositif de réseau.

4. Dispositif de réseau selon la revendication 1, **caractérisé en ce que** le module de mémorisation comprend des composants externes connectés au dispositif de réseau.

5. Dispositif de réseau selon la revendication 3 ou 4, **caractérisé en ce que** les composants internes du dispositif de réseau comprennent : un fond de panier, un panneau latéral ou une sous-baie.

6. Dispositif de réseau selon la revendication 3 ou 4, **caractérisé en ce que** les composants externes du dispositif de réseau comprennent : une carte de mémorisation enfichable déployée dans le fond de panier, le panneau latéral ou la sous-baie du dispositif de réseau.

7. Dispositif de réseau selon la revendication 1, **caractérisé en ce que** le support de mémorisation du module de mémorisation comprend : un support de mémoire morte, un support de mémoire effaçable ou un commutateur à double boîtier en ligne, DIP.

8. Dispositif de réseau selon l'une quelconque des revendications 1 à 6, **caractérisé en ce qu'**il comprend : un multiplexeur d'accès de ligne d'abonné numérique, DSLAM, un commutateur de réseau local, LanSwitch, dans un réseau métropolitain, MAN, et un routeur dans un réseau fédérateur.

9. Procédé de résolution de conflits d'adresse, **caractérisé en ce qu'**il comprend :
la mémorisation d'une information d'ID fixe associée à un dispositif de réseau,
l'information d'ID fixe étant mémorisée dans un module de mémorisation (311), le module de mémorisation étant indépendant d'un composant amovible (32) qui sert de carte active ou de carte de secours ; et
la synchronisation d'une information d'ID du composant amovible servant de carte active lors du transfert avec l'information d'ID fixe associée au dispositif de réseau lorsque le transfert du composant amovible dans le dispositif de réseau se produit.

10. Procédé selon la revendication 9, **caractérisé en ce que** l'information d'ID fixe associée au dispositif de réseau est une adresse unique qui identifie le dispositif de réseau.

11. Procédé selon la revendication 9, **caractérisé en ce que** l'adresse unique comprend :
une adresse de commande d'accès au support, MAC, ou une adresse de Protocole Internet, IP.
